(19) Europäisches Patentamt
European Patent Office
Office européen des brevets

(11) **EP 2 171 535 B1**

(12) **FASCICULE DE BREVET EUROPEEN**

(45) Date de publication et mention
de la délivrance du brevet:
**01.08.2012 Bulletin 2012/31**

(21) Numéro de dépôt: **08775731.6**

(22) Date de dépôt: **21.03.2008**

(51) Int Cl.:
*G02F 1/35* (2006.01)     *G02F 1/21* (2006.01)

(86) Numéro de dépôt international:
**PCT/FR2008/050491**

(87) Numéro de publication internationale:
**WO 2008/132387 (06.11.2008 Gazette 2008/45)**

(54) **PORTE OPTIQUE FIBRÉE À HAUTE RÉSOLUTION TEMPORELLE**

FASEROPTISCHE TÜR MIT HOHER ZEITAUFLÖSUNG

FIBRED OPTICAL DOOR WITH HIGH TIME RESOLUTION

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **29.03.2007 FR 0754118**

(43) Date de publication de la demande:
**07.04.2010 Bulletin 2010/14**

(73) Titulaire: **Commissariat à l'Énergie Atomique
et aux Énergies Alternatives
75015 Paris (FR)**

(72) Inventeur: **JOLLY, Alain
F-33510 Andernos (FR)**

(74) Mandataire: **Ilgart, Jean-Christophe
BREVALEX
95 rue d'Amsterdam
75378 Paris Cedex 8 (FR)**

(56) Documents cités:
JP-A- 7 318 989          US-A1- 2004 081 464
US-A1- 2006 045 536

EP 2 171 535 B1

**Description**

## DOMAINE TECHNIQUE

La présente invention concerne de manière générale le domaine de l'échantillonnage et de la commutation optique, plus particulièrement à l'aide d'un commutateur ultra-rapide utilisant une boucle de Sagnac.

## ÉTAT DE LA TECHNIQUE ANTÉRIEURE

De nombreux types d'échantillonneurs optiques sont connus de l'état de la technique, commandés soit électriquement soit optiquement. Parmi les échantillonneurs à commande optique, certains font appel à un commutateur optique ultra-rapide, comme celui décrit par exemple dans la demande de brevet français N°0451227, déposée le 15 juin 2004 au nom de la demanderesse. Certains commutateurs optiques ultra-rapides utilisent un dispositif interférométrique, par exemple un interféromètre de Mach-Zehnder ou un interféromètre de Sagnac. On trouvera une description de ces commutateurs dans l'ouvrage de G.P. Agrawal intitulé « Lightwave technology » publié chez Wiley-Interscience, pages 380-389.

Les commutateurs Mach-Zehnder souffrent de problèmes de stabilité essentiellement dus à la difficulté de maintenir des déphasages identiques dans les deux bras de l'interféromètre. On leur préfère pour cette raison les commutateurs utilisant un interféromètre de Sagnac.

On distingue généralement deux types de commutateurs à boucle de Sagnac : un commutateur de type tout-fibre à déphasage non linéaire distribué spatialement encore appelé miroir optique non-linéaire ou NLOM (*Non Linear Optical* Mirror) et un commutateur à élément actif non linéaire localisé dans la boucle, généralement un amplificateur à semi-conducteur, encore dénommé NLAM (*Non Linear Amplified Loop Mirror*) ou TOAD *(Terahertz Optical Asymmetric Demultiplexer).*

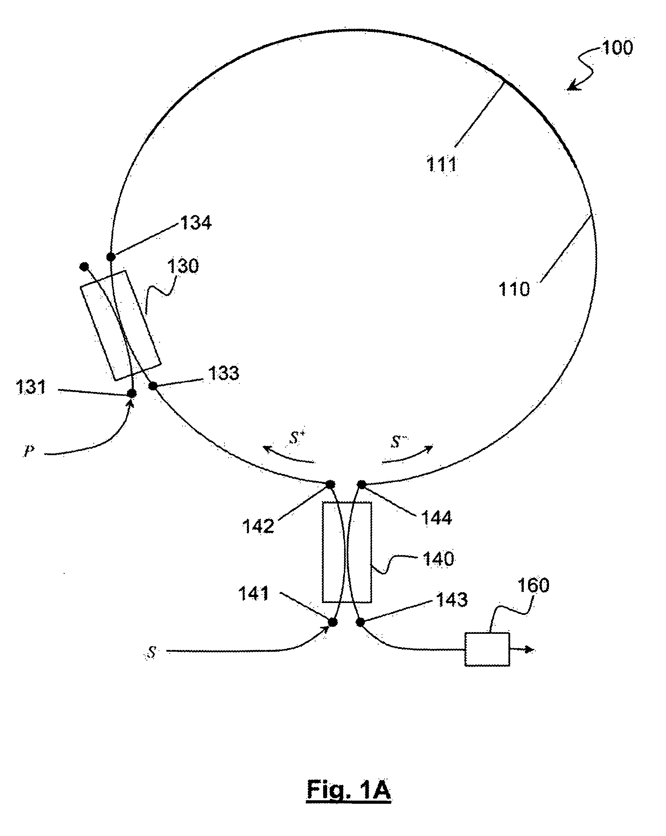

Un commutateur NOLM est illustré en Fig. 1A. Ce commutateur exploite les propriétés non-linéaires d'une fibre optique et plus précisément l'intermodulation de phase (*Cross-Phase Modulation* ou XPM) qui se produit entre deux ondes à forte intensité.

Le commutateur comprend une fibre optique 110 dont les deux extrémités sont reliées aux ports 142 et 144 d'un coupleur 3dB à 2×2 ports, 140. La fibre 110 comprend un tronçon de fibre non-linéaire 111. Le port 141 du coupleur reçoit en entrée, via un tronçon de fibre, le signal optique à commuter S. Le port 143 fournit comme on le verra plus loin le signal commuté. Un deuxième coupleur 3dB à 2×2 ports, 130, est prévu dans la boucle pour injecter le signal de commutation P. Le signal de commutation est constitué d'impulsions optiques de longueur d'onde différente de celle du signal à commuter, de forte intensité et très faible durée, typiquement de l'ordre de quelques picosecondes. Il peut être généré par exemple au moyen d'un laser à modes bloqués.

Le signal à commuter S, injecté en 141, se divise en deux signaux $S^+$ et $S^-$, se propageant respectivement dans le sens horaire et le sens anti-horaire. Les signaux $S^+$ et $S^-$ sont de même amplitude mais déphasés de π/2.

En l'absence de signal de commutation, les signaux $S^+$ et $S^-$ se retrouvent après un tour de boucle respectivement en entrée des ports 144 et 142 avec le même déphasage π/2. Chacun des signaux $S^+$ et $S^-$ se divise à nouveau en deux en sortie du coupleur. Les signaux ainsi divisés se retrouvent avec un déphasage nul en sortie du port 141 et un déphasage de π en sortie du port 143. Il en résulte que le signal S se retrouve réfléchi entièrement par le port 141 et qu'aucun signal n'est transmis sur le port 143.

Lorsqu'une impulsion de commutation est injectée dans la fibre grâce au coupleur 130, la boucle devient dissymétrique. En effet, l'onde $S^+$ se propageant dans le même sens et en même temps que l'impulsion de commutation subit un déphasage dû à l'interaction non-linéaire, alors que l'onde $S^-$, se propageant en sens inverse, n'est que très faiblement affectée par cette interaction. Autrement dit, tout se passe comme si l'indice du tronçon de fibre 111 était différent pour une onde en co-propagation et pour une onde en contre-propagation par rapport à l'impulsion de commutation P. En choisissant convenablement l'intensité du signal de commutation et la longueur du tronçon de fibre 111, on peut obtenir un déphasage non-linéaire de π. Dans ce cas, la quasi-totalité de la puissance optique se trouve entièrement en sortie du port 143, autrement dit l'onde S se trouve « commutée » sur le port 143 pendant la durée de l'impulsion de commutation. Lorsque l'on choisit des longueurs d'onde différentes pour le signal à commuter et le signal de commutation, afin de pouvoir les discriminer par filtrage, un filtre optique passe-bande 160, sélectif en longueur d'onde, par exemple un filtre interférentiel, élimine le signal de commutation pour ne laisser passer que le signal commuté.

La durée de commutation du commutateur NOLM est néanmoins limitée par les effets de dispersion dans le tronçon de fibre 111. En effet les ondes $S^+$ et P n'ayant pas la même longueur d'onde ont des vitesses de groupe différentes. Il en résulte que l'impulsion de commutation P glisse par rapport à l'onde $S^+$ pendant leur co-propagation dans ledit tronçon (effet dit de GVD pour *Group Velocity Dispersion*), ce qui se traduit en définitive par un élargissement de la fenêtre de commutation par rapport à la durée de l'impulsion. En pratique pour des durées d'impulsion très brèves, la largeur de la fenêtre de commutation est essentiellement déterminée par la durée de GVD :

$$T_w = L \left| \frac{1}{v_g} - \frac{1}{v_c} \right| \qquad\qquad (1)$$

où $v_g$ et $v_c$ sont respectivement les vitesses de groupe de l'onde $S^+$ et de l'impulsion de commutation, et $L$ est la longueur du tronçon non-linéaire.

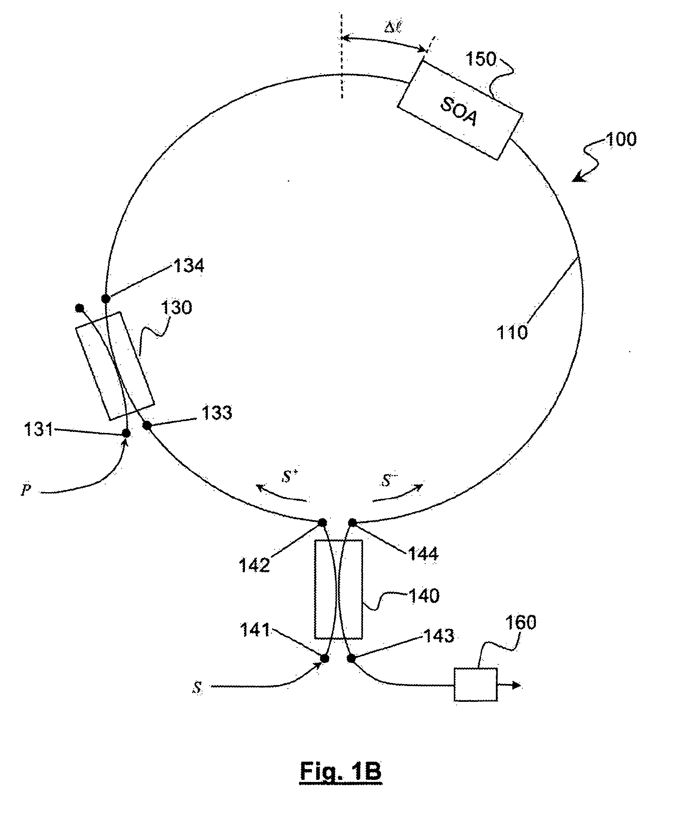

Le commutateur NALM, représenté schématiquement en Fig. 1B, permet d'obtenir une durée de commutation moins sensible à la dispersion dans la fibre. Les éléments identiques à ceux de la Fig. 1A portent les mêmes signes de référence. Le commutateur NALM diffère du précédent en ce que la boucle comprend un élément non linéaire localisé, 150, en général un amplificateur optique à semi-conducteur (SOA). Il s'agit d'un composant actif qui présente l'intérêt d'une très forte non linéarité intrinsèque mais qui est aussi générateur de bruit. Par élément localisé, on entend ici un élément dont la longueur optique est sensiblement plus faible que celle de la boucle. Comme indiqué sur la Fig. 1B, cet élément est placé du côté opposé au coupleur optique 130 et décalé d'un offset ($\Delta\ell$) par rapport au point médian de la boucle.

Le déphasage non-linéaire est localisé dans l'élément 150. L'impulsion de commutation est déclenchée de manière à ce qu'elle atteigne l'élément 140 après l'onde en contre-propagative $S^-$ mais avant l'onde co-propagative $S^+$. De ce fait, les ondes $S^+$ et $S^-$ subissent des lois de déphasage non-linéaire décalées d'un retard $\tau$ soit $\phi_{NL}^+(t)$ et $\phi_{NL}^-(t)$. Si le déphasage relatif $\phi_{NL}^+(t) - \phi_{NL}^-(t)$ vaut $\pi$, le signal $S$ est commuté sur le port 143 comme précédemment. A la différence du commutateur NOLM, la durée de commutation est sensiblement indépendante de la dispersion dans la fibre. Elle est déterminée par le temps de réponse de l'élément non linéaire et le retard $\tau = 2\Delta\ell/v_g$ où $\Delta\ell$ est le décalage de l'élément par rapport au point médian, et $v_g$ est la vitesse de groupe des ondes $S^+$ et $S^-$. La durée de commutation est réglable à l'aide de $\Delta\ell$, mais est cependant limitée vers les faibles valeurs.

L'élément non-linéaire est de préférence un amplificateur optique à semi-conducteur, choisi en raison de sa forte non-linéarité intrinsèque. Toutefois, ce dernier présente des temps de réponse pouvant atteindre quelques centaines de picosecondes, ce qui limite sérieusement la fréquence de commutation.

Afin de réduire la durée de commutation, une architecture de commutateur NALM à deux boucles cascadées a été proposée par B.C. Wang et al. dans un article intitulé « A novel fast optical switch based on two cascaded Terahertz Optical Asymmetric Demultiplexer », publié le 14 janvier 2002 dans la revue Optics Express, Vol. 10, N° 1, pages 15-23.

Dans ce commutateur, la fenêtre de commutation résulte de l'intersection d'une première fenêtre de commutation générée dans la première boucle et d'une seconde fenêtre de commutation, générée dans la seconde boucle.

Toutefois, ce commutateur présente une structure à deux boucles cascadées, relativement complexe, et un niveau de bruit optique élevé, dû à l'émission spontanée dans les amplificateurs à semi-conducteur situés à l'intérieur des deux boucles cascadées et dans les deux amplificateurs à fibre dopée en sortie de ces boucles.

En outre, le grand nombre de composants utilisés et de tronçons de fibre le long du trajet optique rend difficile le maintien de la polarisation du signal à commuter, ce qui dégrade le contraste d'interférence entre ondes contre-propagatives en sortie des boucles et, par conséquent, le coefficient d'extinction du commutateur.

Un premier but de la présente invention est de proposer un commutateur optique robuste et de structure très simple permettant de remédier aux inconvénients précités, notamment d'atteindre des durées de commutation ultra-courtes tout en conservant un très haut coefficient d'extinction grâce, entre autres, à une très faible dépolarisation. Un second but de la présente invention est de réaliser un échantillonneur optique à très haute résolution temporelle et très grande dynamique mettant en oeuvre un tel commutateur et bénéficiant des avantages qu'il procure.

## EXPOSÉ DE L'INVENTION

La présente invention est définie par un commutateur optique comprenant une boucle en fibre optique monomode dont au moins un tronçon est non-linéaire, ladite boucle étant refermée sur un premier coupleur optique, ledit commutateur comprenant un second coupleur optique adapté à injecter un signal de commutation dans ladite boucle selon un premier sens de propagation, le premier coupleur optique étant adapté à injecter et à diviser un signal à commuter en deux premiers signaux se propageant en sens horaire et anti-horaire dans la boucle et à en extraire un premier signal commuté par une première fenêtre de commutation, ledit commutateur comprenant en outre :

- des moyens pour réinjecter le premier signal commuté dans ladite boucle via ledit premier coupleur ;
- des moyens pour réinjecter ledit signal de commutation dans ladite boucle, selon un second sens de propagation opposé au dit premier sens, lorsque ledit premier signal commuté est réinjecté dans la boucle ;

- ledit premier coupleur étant en outre adapté à diviser le premier signal commuté en deux seconds signaux se propageant en sens horaire et anti-horaire dans la boucle et à en extraire un second signal commuté par une seconde fenêtre de commutation chevauchant ladite première fenêtre de commutation.

Selon un premier mode de réalisation, le commutateur comprend un premier tronçon et un second tronçon de fibre non linéaire, le second coupleur optique étant adapté à injecter le signal de commutation dans le premier tronçon selon ledit premier sens de propagation et les moyens pour réinjecter le signal de commutation étant adaptés à réinjecter, via ledit second coupleur, ledit signal de commutation dans le second tronçon, selon ledit second sens de propagation.

Les moyens pour réinjecter le signal de commutation comprennent avantageusement un premier miroir dichroïque adapté à réfléchir le signal de commutation et à ne pas réfléchir le signal à commuter.

Les moyens pour réinjecter le signal de commutation comprennent en outre un premier élément de retard situé entre le premier miroir dichroïque et un port du second coupleur optique.

Selon une seconde variante de réalisation, le commutateur comprend un seul tronçon de fibre non linéaire et les moyens pour réinjecter le signal de commutation comprennent un troisième coupleur optique, les second et troisième coupleurs optiques ayant le même coefficient de couplage et étant respectivement adaptés à injecter le signal de commutation dans ledit tronçon selon lesdits premier et second sens de propagation.

Avantageusement, le commutateur comprend un quatrième coupleur optique recevant sur un port d'entrée le signal de commutation et dont les ports de sortie sont respectivement reliés à un port d'entrée du second coupleur optique et à un port d'entrée du troisième coupleur optique.

Les moyens pour réinjecter le signal de commutation comprennent de préférence un premier élément de retard situé entre un port de sortie dudit quatrième coupleur optique et ledit port d'entrée du troisième coupleur optique.

Les moyens pour réinjecter le premier signal commuté comprennent avantageusement un second miroir dichroïque adapté à réfléchir le signal à commuter et ne pas réfléchir le signal de commutation.

Les moyens pour réinjecter le premier signal commuté comprennent un tronçon de fibre quart d'onde situé entre le premier coupleur et le second miroir dichroïque, et le signal à commuter possède une polarisation linéaire en entrée dudit premier coupleur.

Avantageusement, le miroir dichroïque est réalisé grâce au dépôt d'une couche réflectrice en bout du tronçon de fibre quart d'onde.

Les moyens pour réinjecter le premier signal commuté comprennent en outre de préférence un second élément de retard situé entre le premier coupleur et ledit tronçon de fibre quart d'onde.

Selon une première variante, la valeur de retard du premier élément de retard assure le chevauchement des première et seconde fenêtres de commutation.

Selon une seconde variante, les valeurs de retards respectives des premier et second éléments de retard assurent le chevauchement des première et seconde fenêtres de commutation.

La boucle du commutateur optique comprend avantageusement un dispositif mécanique de correction de polarisation. Ladite fibre optique est une fibre biréfringente à maintien de polarisation.

Selon un mode préféré de réalisation, le signal à commuter est transmis à un port d'entrée du premier coupleur via un cinquième coupleur à l'entrée duquel se trouve un premier polariseur, l'autre port d'entrée étant relié à un second polariseur, dont le plan de polarisation est orthogonal à celui du premier polariseur.

De préférence, un photodétecteur est monté en sortie dudit second polariseur.

Un filtre interférentiel laissant passer le signal commuté mais non le signal de commutation peut être placé entre ledit second polariseur et le photodétecteur.

L'invention concerne également un échantillonneur optique comprenant un commutateur optique tel qu'exposé plus haut, adapté à commuter un signal à échantillonner pendant une fenêtre d'échantillonnage.

Ledit échantillonneur optique comprend des moyens de réplication recevant en entrée le signal à échantillonner et fournissant des répliques de ce signal, à une fréquence de réplication, au dit commutateur optique.

Le signal de commutation est typiquement constitué d'une séquence d'impulsions dont la fréquence est voisine du double de ladite fréquence de réplication.

De préférence l'échantillonneur comprend un isolateur optique entre la sortie des moyens de réplication et l'entrée du commutateur optique.

Les moyens de réplication de l'échantillonneur comprennent avantageusement une seconde boucle en fibre optique fermée sur un sixième coupleur optique, le signal optique à échantillonner étant injecté dans la boucle via un port d'entrée de ce coupleur, les deux extrémités de cette fibre étant respectivement reliées à l'autre port d'entrée et à un port de sortie du sixième coupleur, l'autre port de sortie du sixième coupleur fournissant lesdites répliques du signal à échantillonner au commutateur optique, et des moyens d'amplification pour compenser l'atténuation du signal dans ladite seconde boucle.

Les moyens d'amplification comprennent avantageusement un amplificateur paramétrique pompé par des créneaux de pompe synchronisés avec le passage des répliques du signal à échantillonner dans la boucle, l'amplificateur paramétrique étant suivi par un filtre d'onde idler.

L'échantillonneur peut également comprendre des moyens de modulation électro-optique pour convertir ledit signal électrique en un signal optique et un échantillonneur optique, comme exposé ci-dessus, pour échantillonner le signal optique ainsi obtenu.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1A illustre schématiquement un premier commutateur optique connu de l'état de la technique ;
La Fig. 1B illustre schématiquement un second commutateur optique connu de l'état de la technique ;
La Fig. 2 illustre un commutateur optique selon un premier mode de réalisation de l'invention ;
La Fig. 3 montre le principe de génération de la fenêtre de commutation selon l'invention ;
La Fig. 4 illustre un commutateur optique selon un second mode de réalisation de l'invention ;
La Fig. 5 illustre un échantillonneur optique utilisant un commutateur optique selon le premier ou le second mode de réalisation de l'invention.

## EXPOSÉ DÉTAILLÉ DE MODES DE RÉALISATION PARTICULIERS

L'idée à la base de l'invention est de réaliser, dans une boucle unique, un commutateur de type interféromètre de Sagnac « tout-fibre » dont la fenêtre de commutation résulte de l'intersection d'une première fenêtre, générée lors d'un premier passage aller dans la boucle, et d'une seconde fenêtre de commutation, générée lors d'un second passage retour, la seconde fenêtre étant choisie légèrement désynchronisée par rapport à la première.

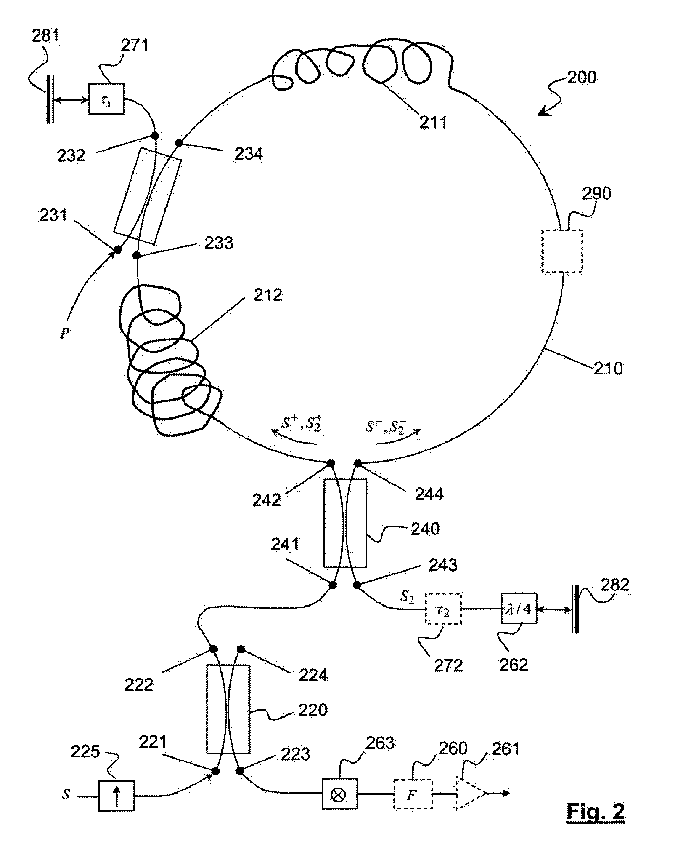

La Fig. 2 illustre schématiquement un commutateur optique selon un premier mode de réalisation de l'invention. Le commutateur 200 est réalisé autour d'une boucle en fibre optique monomode 210 comprenant un premier tronçon 211 et un second tronçon 212 de fibre non linaire. Selon une variante particulière, la fibre optique constitutive de la boucle n'est constituée que de tronçons de fibre non linéaire.

La fibre optique utilisée est de type à maintien de polarisation, encore appelée fibre PM. On rappelle qu'une telle fibre est fortement biréfringente, sa biréfringence étant définie par deux axes de propagation orthogonaux : un axe rapide et un axe lent.

Le commutateur comprend trois coupleurs directionnels fibrés, à 2×2 ports : le premier coupleur 220 fait office de duplexeur et permet de séparer le signal à commuter destiné à être injecté dans la boucle et le signal commuté qui en a été extrait, le second coupleur 230 permet d'injecter le signal de commutation pendant les passages aller et retour dans la boucle, le troisième coupleur 240 réalise l'injection du signal à commuter pour un premier passage dans la boucle, l'injection d'un signal commuté une première fois pour un second passage dans la boucle, et enfin l'extraction du signal commuté final. Les coupleurs sont avantageusement choisis de type monomode et à maintien de polarisation.

On rappelle que de manière générale un coupleur optique à 2×2 ports, c'est-à-dire 2 ports d'entrée et 2 ports de sortie, est caractérisé par une matrice de transfert unitaire et symétrique :

$$T_c = \begin{pmatrix} \sqrt{\rho} & i\sqrt{1-\rho} \\ i\sqrt{1-\rho} & \sqrt{\rho} \end{pmatrix} \qquad (2)$$

où p est la fraction de puissance transmise en direct d'un port d'entrée au port de sortie correspondant et 1-p est le coefficient de couplage de puissance. Le coupleur optique 240 est un coupleur 3dB, c'est-à-dire p=0.5. Le coupleur 230 est avantageusement mais non nécessairement un coupleur 3dB.

Le coupleur 220 reçoit sur son port 221 le signal à commuter S, par exemple un signal laser de longueur d'onde située dans la gamme 1.03 à 1.08 $\mu$m ou dans la gamme 1.5 à 1.55 $\mu$m, et le transmet avec une puissance moitié sur son port 222. De même, le coupleur 220 reçoit sur le port 222 le signal extrait de la boucle et le transmet avec une puissance moitié sur le port 223.

Un premier polariseur fibré 225 est prévu en entrée du coupleur 220, sur son port 221, de manière à confirmer la polarisation ou à polariser le signal à commuter S selon l'axe rapide ou l'axe lent de la fibre. De manière similaire, en sortie du port 223, on a prévu un second polariseur fibré 263 dont le rôle est de sélectionner le signal commuté émergeant en sortie 223 en agissant comme analyseur de polarisation. Le plan de polarisation propre de 263 est décalé de 90 degrés par rapport à celui de 225. Les polariseurs fibrés 225 et 263 peuvent être avantageusement du type « tout fibre », à champ évanescent, connu de l'état de la technique. Un tel polariseur permet la sélection de polarisation grâce au dépôt d'une couche métallique plane et orientée, déposée le long du coeur en silice de la fibre.

Un photodétecteur 261 peut être éventuellement prévu en aval du polariseur 263 pour convertir le signal optique commuté en un signal électrique. Si la réponse spectrale du photodétecteur n'est pas suffisamment sélective pour séparer le signal commuté du signal de commutation, on intercale en amont du photodétecteur un filtre optique 260 destiné à éliminer le signal de commutation, par exemple un filtre interférentiel ou à réseau de Bragg fibré. De préférence, on utilisera comme photodétecteur une photodiode au silicium pour la configuration dans laquelle la longueur d'onde du signal à commuter sera située dans la gamme 1.03 à 1.08 $\mu$m et la longueur d'onde du signal de commutation sera située dans la gamme 1.5 à 1.55 $\mu$m. Une telle photodiode présente dans cette configuration l'avantage d'un niveau de bruit très faible et une réponse spectrale très faible au-delà de 1.08 $\mu$m.

Le coupleur 230 reçoit sur son port 231 le signal de commutation. Ce signal est constitué d'une impulsion ou une séquence d'impulsions très brèves, par exemple des impulsions issues d'un laser à modes bloqués. Si une séquence périodique est utilisée, la période devra respecter une contrainte que nous verrons plus loin. La longueur d'onde du signal de commutation est choisie différente de celle du signal à commuter. Par exemple, si le signal à commuter a une longueur d'onde située dans la gamme 1.03 à 1.08 $\mu$m, gamme spectrale des lasers actuels à base de Néodyme ou d'Ytterbium, le signal de commutation aura avantageusement une longueur d'onde égale autour de 1.3 $\mu$m ou 1.5 $\mu$m. Le signal de commutation est injecté une première fois dans la boucle via le port 234, dans le sens horaire, et une seconde fois, après un retard prédéterminé, via le port 233 dans le sens anti-horaire. Plus précisément, le signal de commutation P présent en entrée du port 231 est divisé en deux fractions de même intensité ou d'intensités proches apparaissant respectivement en sortie des ports 232 et 234, la première fraction étant dirigée vers un premier retard optique 271 et la seconde étant directement injectée dans la boucle. Le retard optique 271 est réalisé par exemple au moyen d'un simple tronçon de fibre, de longueur calibrée. Le signal issu du port 232 est retardé une première fois en traversant le retard 271 dans le sens aller, puis réfléchi par le miroir dichroïque 281 et retardé une seconde fois en traversant le même retard dans le sens inverse.

Le miroir dichroïque 281 présente un coefficient de réflexion élevé à la longueur d'onde du signal de commutation et faible à la longueur d'onde du signal à commuter. Ainsi la fraction parasite de signal à commuter, qui atteint le port 232 par injection via le port 233, est éliminée par le miroir 281. Selon une variante avantageuse de réalisation, le miroir dichroïque 281 peut être réalisé au moyen d'un simple traitement réflecteur déposé en bout de fibre, lorsque la puissance du signal de commutation est modérée c'est-à-dire de l'ordre de quelques centaines de Watts au plus. Pour des puissances supérieures, dans la gamme des kW, le miroir sera déporté grâce à un dispositif de couplage monomode guidé (non représenté) à profil d'indice SELFOC, ce qui permet d'étaler la tache du faisceau sur le miroir et, par conséquent, de réduire sa densité de puissance surfacique. Ce cas particulier concernant les très fortes puissances représente néanmoins la seule exception à la réalisation purement fibrée de l'invention. Dans les deux cas, la réponse spectrale de l'élément réflecteur pourra être optimisée de manière à compenser l'élargissement temporel de l'impulsion de commutation dû à la dispersion dans le tronçon de fibre 271, par exemple en utilisant un miroir de Bragg à pas « chirpé ».

Le coupleur 240 reçoit sur son port d'entrée 241 le signal à commuter $S$ et le divise en deux signaux $S^+$ et $S^-$ déphasés de $\pi/2$ apparaissant respectivement en sortie des ports 242 et 244. Plus précisément, $S^+ = S/2$ et $S^- = iS/2$, à un terme multiplicatif de déphasage commun près. Les signaux $S^+$ et $S^-$ se propagent dans la boucle respectivement dans le sens horaire et le sens anti-horaire. Le signal $S^+$ se co-propage avec le signal de commutation dans le tronçon de fibre non linéaire 211, et de ce fait subit un déphasage non-linéaire pendant la largeur de l'impulsion de commutation comme dans un commutateur NOLM conventionnel, avec élargissement de la fenêtre de commutation dû à la dispersion dans la fibre. A l'inverse l'onde contre-propagative ne subit quasiment pas de déphasage non linéaire.

La puissance de l'impulsion de commutation P et la longueur du tronçon de fibre 211 sont choisies de manière à ce que le déphasage non-linéaire introduit par la fibre soit de $\pi$. Ainsi, après un tour de boucle, comme dans un commutateur NOLM conventionnel, le coupleur 240 ne transmet le signal $S$ en sortie sur le port 243 que pendant la fenêtre de commutation, notée ici $W_1$. Cette fenêtre n'est autre que la convolution de l'impulsion du signal de commutation et de la réponse impulsionnelle de la fibre. Sa largeur $T_{w1}$ est donc sensiblement plus grande que celle de l'impulsion de commutation elle-même, du fait de l'effet de GVD dans le tronçon 211. La fraction de signal non commutée est transmise sur le port 241 du coupleur 240. Cette fraction de signal se retrouve ensuite sur les ports 221 et 223 du coupleur 220. Si nécessaire, on pourra éviter que ladite fraction ne revienne vers la source du signal à commuter grâce à un isolateur optique (non représenté). Il est important de noter que cette fraction ne peut atteindre le photodétecteur 261, puisque la polarisation de ladite fraction est orthogonale à la polarisation propre du polariseur 263.

Le signal $S$ découpé par la fenêtre de commutation $W_1$, est noté $S_2$. Il apparaît sur le port 243 et est ensuite réfléchi par le miroir dichroïque 282. Il subit une rotation de polarisation de 90° lors de son passage aller-retour dans le tronçon de fibre quart d'onde 262 avant d'être réinjecté dans la boucle via le même port. L'axe propre du tronçon de fibre quart d'onde est choisi orienté à 45° par rapport à l'axe lent ou à l'axe rapide de la fibre PM, autrement dit par rapport au plan de polarisation du signal $S_2$ incident.

Le tronçon de fibre quart d'onde peut avantageusement être réalisé au moyen d'un tronçon de fibre mécaniquement contraint, convenablement réglé et fixé, connu dans l'état de la technique sous le nom de « boucle de Lefèvre ».

Le miroir dichroïque 282 présente un coefficient de réflexion élevé à la longueur d'onde du signal à commuter et faible à la longueur d'onde du signal de commutation. Ainsi, le résidu de signal de commutation présent dans la fenêtre de commutation est éliminé par le miroir dichroïque. Ce miroir peut être réalisé avantageusement par dépôt d'une couche réflectrice en bout du tronçon de fibre quart d'onde ou bien grâce à un miroir déporté à travers un tronçon de fibre SELFOC, comme envisagé pour le miroir 281. Si le miroir est déporté, la portion de fibre située entre le tronçon quart d'onde 262 et le miroir dichroïque est une fibre monomode non biréfringente de manière à conserver la polarisation circulaire le long du trajet aller-retour entre l'extrémité du tronçon 262 et le miroir 282.

Après réflexion par le miroir dichroïque, le signal $S_2$ est divisé par le coupleur 240 en une onde $S_2^+$ et une onde $S_2^-$ se propageant respectivement dans le sens horaire et le sens anti-horaire. Le signal de commutation est injecté par le coupleur 230 dans le sens inverse du sens précédent, c'est-à-dire ici anti-horaire. Lors du second tour, la propagation dans la boucle s'effectue avec une direction de polarisation décalée de 90 degrés par rapport à celle du premier tour. Plus précisément, si, lors du premier tour, la propagation se fait avec une polarisation selon l'axe lent de la fibre PM, la propagation se fait avec une polarisation selon l'axe rapide, lors du second tour.

Selon une variante de réalisation, on intercale un second élément de retard 272 non dépolarisant entre le port 243 et le miroir dichroïque 282. Dans ce cas, le signal $S_2$ est d'abord retardé une première fois en traversant le retard 272 dans le sens aller, puis réfléchi par le miroir dichroïque 282 et retardé une seconde fois en traversant le même retard dans le sens inverse. Si ce second élément de retard est prévu, typiquement réalisé de manière avantageuse sous forme d'un tronçon de fibre optique, on peut compenser l'élargissement temporel du signal $S_2$ à travers cet élément de retard en utilisant pour 282 un miroir de Bragg à pas « chirpé ».

La valeur de $\tau_1$ et de l'élément de retard 271 est choisie de manière à ce que l'impulsion de commutation soit légèrement décalée par rapport à l'onde $S_2^-$, lorsque ces dernières se co-propagent, lors du second passage, dans le tronçon de fibre 212. Lorsque le second élément de retard est présent, les valeurs respectives $\tau_1$ et $\tau_2$ des premier et second éléments de retards, doivent être convenablement choisies pour que la condition précitée soit satisfaite.

Plus précisément, lors du second passage dans la boucle, le signal de commutation se propage dans le tronçon 212 en chevauchant l'onde $S_2^-$, ce qui induit un déphasage non-linéaire dans une fenêtre $W_2$, généralement plus large que la durée de l'impulsion de commutation à cause de l'effet de GVD. Comme précédemment, le déphasage non-linéaire subi par l'onde contre-propagative peut être négligé. En choisissant convenablement la longueur du second tronçon de fibre 212, ledit déphasage non linéaire vaut $\pi$. On notera toutefois que le second tronçon de fibre 212 est généralement plus long que le premier tronçon 211, si les tronçons de fibres sont identiques, puisque la puissance du signal de commutation est réduite lors du second passage.

Finalement, au terme du second tour de boucle, les ondes $S_2^+$ et $S_2^-$ n'interfèrent constructivement en sortie du port 241 que dans une fenêtre de commutation $W$ très brève, intersection de la première fenêtre de commutation $W_1$ et de la seconde fenêtre de commutation $W_2$.

Le signal ainsi commuté se retrouve sur les ports 221 et 223 du coupleur 220. La polarisation du signal commuté étant parallèle à celle du polariseur 263, ce signal se retrouve en sortie.

Selon une variante de réalisation, si l'on souhaite obtenir le signal commuté sous forme électrique, le signal commuté est transmis via le polariseur 263 vers le photodétecteur 261. Le cas échéant, si la réponse spectrale du photodétecteur n'est pas suffisamment sélective, un filtre 260 peut être placé entre le polariseur 263 et le photodétecteur.

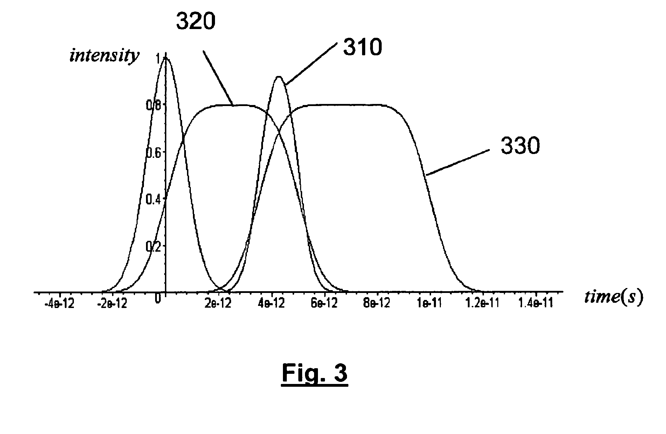

La Fig. 3 illustre le principe de génération de fenêtre de commutation $W$. On a indiqué en abscisses le temps et en ordonnées l'intensité du signal.

La courbe 310 représente la forme de l'impulsion de commutation. Les courbes 320 et 330 représentent respectivement les formes de la première fenêtre de commutation $W_1$ et de la seconde fenêtre de commutation $W_2$. On notera que la fenêtre de commutation $W_2$ est plus large que $W_1$, puisque l'effet de GVD est plus important lors du second passage (le tronçon 212 est plus long que le tronçon 211). Le décalage entre les deux fenêtres est obtenu en ajustant la valeur de retard $\tau_1$, (le cas échéant les valeurs de retard $\tau_1$ et $\tau_2$). Cette opération peut être réalisée lors d'une phase de calibration, le cas échéant en utilisant des moyens de réflectométrie.

La fenêtre de commutation résultante $W$ représentée en 310 n'est autre que le produit des fenêtres temporelles $W_1$ et $W_2$. Etant donné que le coefficient d'extinction de $W$ est le produit de ceux de $W_1$ et $W_2$, on en conclut que la dynamique du signal en sortie du commutateur représenté en Fig. 3 est supérieure à celle d'un commutateur NOLM conventionnel à un seul passage. Elle est essentiellement limitée par le taux d'extinction de 263, qui peut dépasser 40dB.

Il est important de remarquer que le commutateur optique représenté en Fig. 3 est de structure particulièrement simple. Etant donné qu'il n'utilise aucun composant actif et que les états de polarisation sont maîtrisés, le rapport signal à bruit du signal commuté est très élevé.

Enfin, il est essentiel de noter que, grâce à sa structure exclusivement fibrée, le commutateur selon l'invention permet de garantir de manière très simple que les ondes venant interférer dans le coupleur 240, possèdent la même polarisation. Afin de garantir un maintien de la polarisation optimum, on utilisera avantageusement des coupleurs 230 et 240 à maintien de polarisation, et optionnellement, un contrôleur mécanique de polarisation 290 placé dans la boucle. Ce contrôleur, par exemple de type mécanique « passif » ou piézoélectrique « actif », permet de corriger une éventuelle dépolarisation dans la fibre et est réglé lors de la phase de calibration préalable.

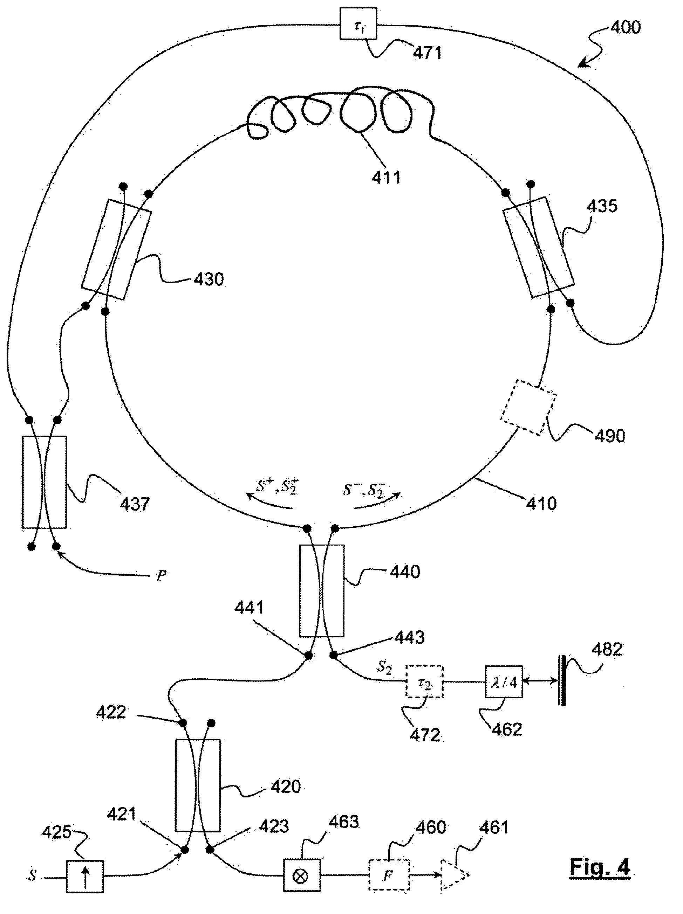

La Fig. 4 illustre un commutateur optique selon un second mode de réalisation de l'invention.

Ce mode de réalisation diffère du précédent en ce qu'il n'utilise qu'un seul tronçon de fibre non-linéaire 411, le signal de commutation étant alors injecté une première fois à l'une des extrémités du tronçon de manière à ce qu'il s'y propage dans un premier sens, puis une seconde fois à son autre extrémité, de manière à ce qu'il s'y propage dans le sens inverse.

Le commutateur 400 est organisé autour d'une boucle en fibre optique monomode PM 410 comprenant un tronçon 411 de fibre non linéaire. Selon une variante, la fibre 410 est non-linéaire sur toute sa longueur.

Les coupleurs optiques 420, 430, 440, le miroir dichroïque 482, le contrôleur de polarisation 490, les polariseurs fibrés 425 et 463, le tronçon quart d'onde 462 et le photodétecteur 460 sont identiques aux éléments correspondants respectifs 220, 230, 240, 282, 290, 225, 263, 262 et 260 de la Fig. 2, et, ne seront par conséquent pas davantage décrits. Les variantes de réalisation de ces éléments, exposées plus haut, s'appliquent ici *mutatis mutandis*.

Le second mode de réalisation comprend deux coupleurs optiques supplémentaires 437 et 435 pour l'injection du signal de commutation $P$. Plus précisément, ce signal est divisé en 2 fractions de même intensité par le coupleur 3dB, 437, une première fraction étant injectée dans la boucle grâce au coupleur 430 et une deuxième fraction étant injectée avec un temps de retard $\tau_1$ grâce au coupleur 435. Les coupleurs 437 et 435 ne sont pas nécessairement des coupleurs 3dB mais possèdent des coefficients de couplage proches.

Le temps de retard $\tau_1$ est donné par l'élément de retard 471, typiquement un tronçon de fibre optique. Un second élément 472 peut éventuellement être prévu entre le port 472 et le miroir dichroïque 482.

Le fonctionnement du commutateur selon le second mode de réalisation est le suivant. Lors d'un premier passage dans la boucle le signal à commuter est divisé en deux ondes $S^+$ et $S^-$, se propageant respectivement dans le sens horaire et le sens anti-horaire. L'onde $S^+$ se co-propage alors dans le tronçon non linaire avec le signal de commutation, injecté via le coupleur 430, et subit par conséquent un déphasage non-linéaire. Par contre l'onde contre-propagative $S^-$ subit un déphasage linéaire négligeable. L'intensité du signal de commutation et la longueur du tronçon 411 sont choisies de manière à ce que le déphasage non-linéaire introduit par ce dernier soit de $\pi$. Comme précédemment, le signal commuté par la fenêtre $W_1$, noté $S_2$, est réfléchi par le miroir dichroïque 482 et subit une rotation de polarisation de 90° par passage aller-retour dans le tronçon quart d'onde 462, avant d'être réinjecté dans la boucle via le port 443. Le signal $S_2$ est divisé par le coupleur 440 en deux ondes $S_2^+$ et $S_2^-$, se propageant respectivement dans le sens horaire et anti-horaire. L'onde $S_2^-$ se co-propage dans le tronçon 211 avec le signal de commutation $P$, injecté cette fois-ci par le coupleur 435. L'onde $S_2^+$ ne subit qu'un déphasage non-linéaire non négligeable. Etant donné que l'atténuation dans l'élément de retard 471 est négligeable et que les coupleurs 430 et 435 possèdent à peu près le même coefficient de couplage, l'intensité du signal de commutation est identique (ou proche) lors des deux passages. L'interférence constructive sur le port 441 du coupleur 440 donne un signal $S_2$ commuté avec une fenêtre de commutation $W_2$.

En choisissant convenablement $\tau_1$ (et le cas échéant également $\tau_2$), on obtient des fenêtres $W_1$ et $W_2$ qui se chevauchent et l'on peut régler ce chevauchement de manière à ce que la fenêtre composite produit des fenêtres élémentaires, $W = W_1 . W_2$, possède la largeur souhaitée.

Le polariseur 463 remplit la même fonction que dans le premier mode de réalisation, à savoir d'éliminer le signal non commuté apparaissant en 423, après un tour de boucle, et laisser passer le signal commuté apparaissant à ce même port, après deux tours de boucle.

Le signal optique commuté peut être converti en un signal électrique au moyen du photodétecteur 461, éventuellement précédé d'un filtre interférentiel. Le signal commuté apparaît également sur le port 421 où il peut être filtré par un isolateur optique (non représenté).

On remarquera que les commutateurs précédemment exposés sont entièrement fibrés et utilisent des fibres à maintien de polarisation standard, non nécessairement optimisées en termes de profil de dispersion spectrale et peu onéreuses. De surcroît, ces fibres peuvent être employées pour les tronçons non linéaires. Ces commutateurs n'utilisent par ailleurs aucun composant actif générateur de bruit, ce qui est un facteur essentiel pour préserver la dynamique. Le fonctionnement en polarisation croisée permet d'améliorer le contraste de commutation. Enfin, la possibilité de maintenir une très faible dépolarisation est grandement facilitée par la forme du schéma optique, le nombre limité des composants passifs utilisés et leur nature. En particulier, ce schéma permet de minimiser l'influence des effets de dépolarisation susceptibles d'apparaître à haute intensité au cours de la propagation sur une longueur de fibre non linéaire.

Les commutateurs selon les modes de réalisation précédemment exposés permettent de commuter un signal optique d'entrée S pendant une fenêtre de commutation $W$ extrêmement brève, de l'ordre de la picoseconde, vers une sortie (ports 223, 423). Un tel commutateur peut avantageusement être utilisé pour effectuer une commutation temporelle dans un réseau optique OTDM.

On comprendra que ces commutateurs permettent de réaliser, de manière équivalente, l'échantillonnage optique d'un signal optique $S$ avec une fenêtre d'échantillonnage de largeur $W$. Toutefois, les modes de réalisation précédemment exposés ci-dessus ne permettent d'obtenir qu'un seul échantillon à la volée.

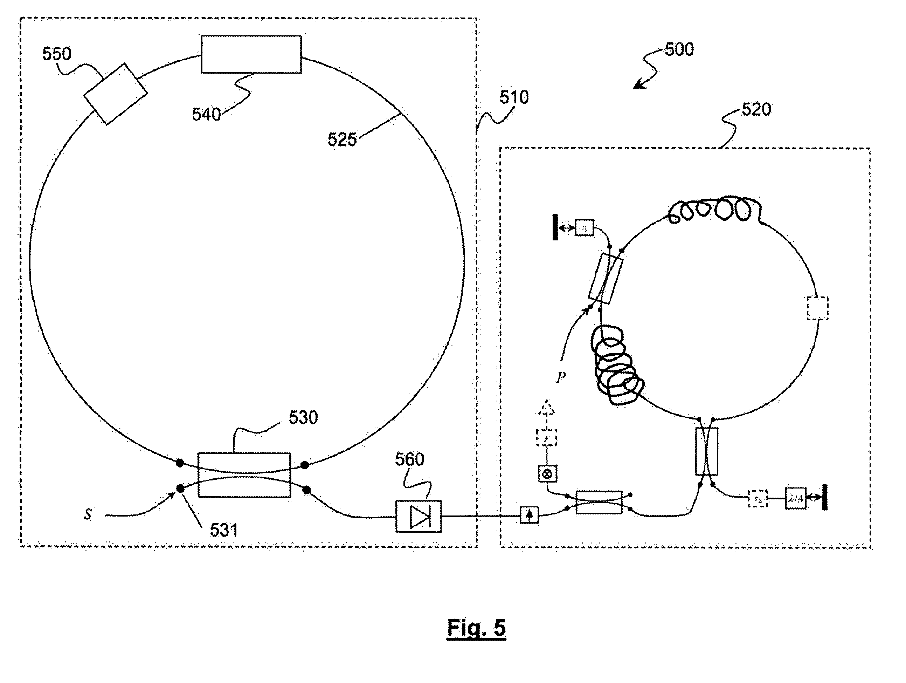

La Fig. 5 représente un échantillonneur optique permettant d'obtenir plusieurs échantillons successifs d'un signal optique avec une fréquence d'échantillonnage $F_s$.

L'échantillonneur 500 comprend d'une part une boucle optique de réplication 510 et un commutateur optique 520, selon le premier ou le second mode de réalisation de l'invention. Pour les besoins de l'illustration, un commutateur a été représenté en 510 mais ne sera pas décrit.

On suppose que la longueur $\ell$ de la fibre de la boucle de réplication est supérieure à $2v_g.T$ où $v_g$ est la vitesse de groupe dans la fibre à la longueur d'onde du signal $S$ à échantillonner et $T$ est la largeur de son support temporel. Plus précisément $\ell = 2v_g T + \delta$ où $\delta$ est une marge que l'on précisera plus loin.

La boucle de réplication 510 comprend une fibre optique monomode 525, un coupleur 530 de type $2\times2$ ports et un amplificateur 540. L'amplificateur 540 est avantageusement un amplificateur paramétrique pompé au moyen d'une onde de pompe en forme de créneau, délivrée par un laser via un dispositif de mise en forme temporelle (non représenté). Un filtre d'onde idler 550 est alors prévu en sortie de l'amplificateur paramétrique.

Le signal à échantillonner est injecté dans la boucle via le port 531 du coupleur 530. La puissance de pompe est choisie de manière à compenser l'atténuation dans un tour de boucle. Le créneau de pompe est synchronisé avec le passage du signal et est choisi de largeur légèrement plus grande que le support du signal à échantillonner.

La boucle de réplication délivre des répliques du signal à échantillonner avec une fréquence $F_r = v_g/\ell$ au commutateur optique 520. Le signal de commutation $P$ est constitué d'impulsions à la fréquence de répétition $2F_c$ avec $F_c = F_r \pm \varepsilon$ où $\varepsilon$ est un très faible écart fréquentiel. La boucle du commutateur 520 est choisie de longueur optique proche de $v_g.T$. Plus précisément, la marge $\delta$ et le retard $\tau_2$ sont choisis de manière à ce que lorsqu'une réplique entre dans le commutateur 510, la réplique précédente en sorte. On comprendra ainsi qu'un nouvel échantillon est acquis à chaque tour de boucle de réplication et tous les deux tours de boucle du commutateur. Du fait du décalage fréquentiel E, l'instant d'échantillonnage glisse à chaque nouvelle réplique d'un temps $\delta\tau \ll T$ par rapport à la réplique précédente, le glissement étant positif ou négatif selon le signe de $\varepsilon$. La fréquence d'échantillonnage n'est alors autre que $F_s = 1/\delta\tau$ bien que les échantillons n'apparaissent en sortie qu'avec la fréquence de réplication $F_r$.

Les échantillons peuvent être récupérés sous forme optique ou bien sous forme électrique, grâce à la conversion dans un photodétecteur. Si les échantillons sont récupérés sous forme électrique un convertisseur CAN peut être prévu en aval du photodétecteur. Etant donné que la fréquence de réplication est sensiblement plus faible que la fréquence d'échantillonnage, la conversion analogique-numérique est réalisable et, ce, avec une bonne dynamique.

De surcroît, un échantillonneur électrique peut être réalisé en prévoyant un modulateur électro-optique du signal électrique à échantillonner en amont de l'échantillonneur de la Fig. 5. Le modulateur optique peut être à modulation directe ou indirecte. Dans le cas d'une modulation indirecte, qui autorise les plus grandes bandes passantes, le modulateur est alimenté à son entrée par une source laser continue stabilisée de faible puissance. Dans le cas d'une modulation directe, on utilisera simplement une diode laser.

L'échantillonneur optique ou électrique ainsi réalisé permet d'atteindre des fréquences d'échantillonnage de l'ordre du Terahertz tout en conservant une dynamique élevée.

## Revendications

**1.** Commutateur optique comprenant une boucle en fibre optique monomode (410) dont au moins un tronçon (411, 412) est non-linéaire, ladite boucle étant refermée sur un premier coupleur optique (240, 340), ledit commutateur comprenant un second coupleur optique (230, 430) adapté à injecter un signal de commutation ($P$) dans ladite boucle selon un premier sens de propagation, le premier coupleur optique étant adapté à injecter et à diviser un signal à commuter ($S$) en deux premiers signaux ($S^+$, $S^-$) se propageant en sens horaire et anti-horaire dans la boucle et à en extraire un premier signal commuté par une première fenêtre de commutation ($W_1$), **caractérisé en ce qu'**il comprend en outre :

- des moyens (272, 262, 282, 472, 462, 482) pour réinjecter le premier signal commuté ($S_2$) dans ladite boucle via ledit premier coupleur ;
- des moyens (271, 281, 471, 435) pour réinjecter ledit signal de commutation dans ladite boucle, selon un second sens de propagation opposé au dit premier sens, lorsque ledit premier signal commuté est réinjecté dans la boucle ;
- ledit premier coupleur (240, 440) étant en outre adapté à diviser le premier signal commuté en deux seconds signaux ($S_2^+$, $S_2^-$) se propageant en sens horaire et anti-horaire dans la boucle et à en extraire un second signal commuté par une seconde fenêtre de commutation ($W_2$) chevauchant ladite première fenêtre de commutation.

**2.** Commutateur optique selon la revendication 1, **caractérisé en ce qu'**il comprend un premier tronçon (211) et un second tronçon (212) de fibre non linéaire, le second coupleur optique (230) étant adapté à injecter le signal de commutation dans le premier tronçon selon ledit premier sens de propagation et les moyens (271, 281) pour réinjecter le signal de commutation étant adaptés à réinjecter, via ledit second coupleur, ledit signal de commutation dans le second tronçon, selon ledit second sens de propagation.

**3.** Commutateur optique selon la revendication 2, **caractérisé en ce que** les moyens pour réinjecter le signal de commutation comprennent en outre un premier miroir dichroïque (281) adapté à réfléchir le signal de commutation et à ne pas réfléchir le signal à commuter.

**4.** Commutateur optique selon la revendication 3, **caractérisé en ce que** les moyens pour réinjecter le signal de commutation comprennent en outre un premier élément de retard (271) situé entre le premier miroir dichroïque et un port (232) du second coupleur optique (230).

**5.** Commutateur optique selon la revendication 1, **caractérisé en ce qu'**il comprend un seul tronçon de fibre non linéaire (411) et que les moyens (471, 435) pour réinjecter le signal de commutation comprennent un troisième coupleur optique (435), les second et troisième coupleurs optiques ayant le même coefficient de couplage et étant respectivement adaptés à injecter le signal de commutation dans ledit tronçon selon lesdits premier et second sens de propagation.

**6.** Commutateur optique selon la revendication 5, **caractérisé en ce qu'**il comprend un quatrième coupleur optique (437) recevant sur un port d'entrée le signal de commutation et dont les ports de sortie sont respectivement reliés à un port d'entrée (431) du second coupleur optique (430) et à un port d'entrée (438) du troisième coupleur optique (435).

**7.** Commutateur optique selon la revendication 6, **caractérisé en ce que** les moyens pour réinjecter le signal de commutation comprennent un premier élément de retard (471) situé entre un port de sortie dudit quatrième coupleur optique et ledit port d'entrée (438) du troisième coupleur optique (435).

**8.** Commutateur optique selon l'une des revendications précédentes, **caractérisé en ce que** les moyens pour réinjecter le premier signal commuté comprennent un second miroir dichroïque (282, 482) adapté à réfléchir le signal à commuter et ne pas réfléchir le signal de commutation.

**9.** Commutateur optique selon la revendication 8, **caractérisé en ce que** les moyens pour réinjecter le premier signal commuté comprennent un tronçon de fibre quart d'onde situé entre le premier coupleur (240, 440) et le second miroir dichroïque (282, 482), et **en ce que** le signal à commuter possède une polarisation linéaire en entrée (241,441) dudit premier coupleur.

**10.** Commutateur optique selon la revendication 9, **caractérisé en ce que** le miroir dichroïque est réalisé grâce au dépôt d'une couche réflectrice en bout du tronçon de fibre quart d'onde.

**11.** Commutateur optique selon la revendication 10, **caractérisé en ce que** les moyens pour réinjecter le premier signal commuté comprennent en outre un second élément de retard (272, 472) situé entre le premier coupleur et ledit tronçon de fibre quart d'onde.

**12.** Commutateur optique selon la revendication 4 ou 7, **caractérisé en ce que** la valeur de retard ($\tau_1$) du premier élément de retard (271, 471) assure le chevauchement des première et seconde fenêtres de commutation.

**13.** Commutateur optique selon les revendications 11 et 12, **caractérisé en ce que** les valeurs de retards respectives ($\tau_1, \tau_2$) des premier et second éléments de retard assurent le chevauchement des première et seconde fenêtres de commutation.

**14.** Commutateur optique selon l'une des revendications précédentes, **caractérisé en ce qu'**il comprend dans la boucle un dispositif mécanique de correction de polarisation (290, 490).

**15.** Commutateur optique selon l'une des revendications précédentes, **caractérisé en ce que** ladite fibre optique est une fibre biréfringente à maintien de polarisation.

**16.** Commutateur optique selon l'une des revendications précédentes, **caractérisé en ce que** le signal à commuter est transmis à un port d'entrée (241, 441) du premier coupleur via un cinquième coupleur (220, 420) à l'entrée duquel se trouve un premier polariseur (225), l'autre port d'entrée (223, 243) étant relié à un second polariseur (263), dont le plan de polarisation est orthogonal à celui du premier polariseur.

**17.** Commutateur optique selon la revendication 16, **caractérisé en ce qu'**un photodétecteur (261, 461) est monté en sortie dudit second polariseur (263, 463).

**18.** Commutateur optique selon la revendication 17, **caractérisé en ce qu'**un filtre interférentiel (260, 460) laissant passer le signal commuté mais non le signal de commutation est placé entre ledit second polariseur (263, 463) et le photodétecteur (261, 461).

**19.** Echantillonneur optique **caractérisé en ce qu'**il comprend un commutateur optique selon l'une des revendications précédentes, adapté à commuter un signal à échantillonner pendant une fenêtre d'échantillonnage.

**20.** Echantillonneur optique selon la revendication 19, **caractérisé en ce qu'**il comprend des moyens de réplication (510) recevant en entrée le signal à échantillonner et fournissant des répliques de ce signal, à une fréquence de réplication, au dit commutateur optique.

**21.** Echantillonneur optique selon la revendication 20, **caractérisé en ce que** le signal de commutation est constitué d'une séquence d'impulsions dont la fréquence est voisine du double de ladite fréquence de réplication.

**22.** Echantillonneur optique selon la revendication 20 ou 21, **caractérisé en ce qu'**il comprend un isolateur optique (560) entre la sortie des moyens de réplication et l'entrée du commutateur optique.

**23.** Echantillonneur optique selon la revendication 22 , **caractérisé en ce que** les moyens de réplication comprennent une seconde boucle en fibre optique (525) fermée sur un sixième coupleur optique (530), le signal optique à échantillonner étant injecté dans la boucle via un port d'entrée de ce coupleur, les deux extrémités de cette fibre étant respectivement reliées à l'autre port d'entrée et à un port de sortie du sixième coupleur, l'autre port de sortie du sixième coupleur fournissant lesdites répliques du signal à échantillonner au commutateur optique, et des moyens d'amplification (540) pour compenser l'atténuation du signal dans ladite seconde boucle.

**24.** Echantillonneur optique selon la revendication 23, **caractérisé en ce que** les moyens d'amplification comprennent un amplificateur paramétrique pompé par des créneaux de pompe synchronisés avec le passage des répliques du signal à échantillonner dans la boucle, l'amplificateur paramétrique étant suivi par un filtre d'onde idler.

**25.** Echantillonneur adapté à échantillonner un signal électrique, **caractérisé en ce qu'**il comprend des moyens de modulation électro-optique pour convertir ledit signal électrique en un signal optique et un échantillonneur optique selon l'une des revendications 19 à 24 pour échantillonner le signal optique ainsi obtenu.

**Claims**

**1.** An optical switch comprising a single-mode optical fibre loop (410), at least one section (411, 412) of which is non-linear, said loop being closed on a first optical coupler (240, 340), said switch comprising a second optical coupler (230, 430) adapted for injecting a switching signal ($P$) into said loop along a first propagation direction, the first optical coupler being adapted for injecting and dividing a signal to be switched ($S$) into two first signals ($S^+$, $S^-$) propagating in a clockwise and anti-clockwise direction in the loop and for extracting therefrom a first switched signal through a first switching window ($W_1$), **characterized in that** it further comprises:

- means (272, 262, 282, 472, 462, 482) for re-injecting the first switched signal ($S_2$) into said loop via said first coupler;
- means (271, 281, 471, 435) for re-injecting said switching signal into said loop, along a second direction of propagation opposite to said first direction, when said first switched signal is reinjected into the loop;
- said first coupler (240, 440) further being adapted for dividing the first switched signal into two second signals ($S_2^+$, $S_2^-$) propagating in a clockwise and anti-clockwise direction in the loop and for extracting therefrom a second switched signal through a second switching window ($W_2$) overlapping said first switching window.

2. The optical switch according to claim 1, **characterized in that** it comprises a first section (211) and a second section (212) of non-linear fibre, the second optical coupler (230) being adapted for injecting the switching signal into the first section along said first direction of propagation and the means (271, 281) for re-injecting the switching signal being adapted for re-injecting via said second coupler, said switching signal into the second section, along said second direction of propagation.

3. The optical switch according to claim 2, **characterized in that** the means for re-injecting the switching signal further comprise a first dichroic mirror (281) adapted for reflecting the switching signal and for not reflecting the signal to be switched.

4. The optical switch according to claim 3, **characterized in that** the means for re-injecting the switching signal further comprise a first delay component (271) located between the first dichroic mirror and a port (232) of the second optical coupler (230).

5. The optical switch according to claim 1, **characterized in that** it comprises a single section of non-linear fibre (411) and that the means (471, 435) for re-injecting the switching signal comprise a third optical coupler (435), the second and third optical couplers having the same coupling coefficient and being respectively adapted for injecting the switching signal into said section along said first and second propagation directions.

6. The optical switch according to claim 5, **characterized in that** it comprises a fourth optical coupler (437) receiving on an input port the switching signal and the output ports of which are respectively connected to an input port (431) of the second optical coupler (430) and to an input port (438) of the third optical coupler (435).

7. The optical switch according to claim 6, **characterized in that** the means for re-injecting the switching signal comprise a first delay component (471) located between an output port of said fourth optical coupler and said input port (438) of the third optical coupler (435).

8. The optical switch according to any of the preceding claims, **characterized in that** the means for re-injecting the first switched signal comprise a second dichroic mirror (282, 482) adapted for reflecting the signal to be switched and not reflecting the switching signal.

9. The optical switch according to claim 8, **characterized in that** the means for re-injecting the first switched signal comprise a quarter wave fibre section located between the first coupler (240, 440) and the second dichroic mirror (282, 482), and **in that** the signal to be switched has a linear polarization at the input (241, 441) of said first coupler.

10. The optical switch according to claim 9, **characterized in that** the dichroic mirror is produced by means of a deposit of a reflective layer on the end of the quarter wave fibre section.

11. The optical switch according to claim 10, **characterized in that** the means for re-injecting the first switched signal further comprise a second delay component (272, 472) located between the first coupler and said quarter wave fibre section.

12. The optical switch according to claim 4, **characterized in that** the value of the delay ($\tau_1$) of the first delay component (271, 471) ensures overlapping of the first and second switching windows.

13. The optical switch according to claims 11 and 12, **characterized in that** the respective delay values ($\tau_1, \tau_2$) of the first and second delay components ensure overlapping of the first and second switching windows.

14. The optical switch according to any of the preceding claims, **characterized in that** it comprises in the loop a mechanical device for correcting polarization (290, 490).

15. The optical switch according to any of the preceding claims, **characterized in that** said optical fibre is a birefringent polarization-maintaining fibre.

16. The optical switch according to any of the preceding claims, **characterized in that** the signal to be switched is transmitted to an input port (241, 441) of the first coupler via a fifth coupler (220, 420) at the input of which is found a first polarizer (225), the other input port (223, 243) being connected to a second polarizer (263), the plane of polarization of which is orthogonal to that of the first polarizer.

17. The optical switch according to claim 16, **characterized in that** a photodetector (261, 461) is mounted at the output of said second polarizer (263, 463).

18. The optical switch according to claim 17, **characterized in that** an interferential filter (260, 460) letting through the switched signal but not the switching signal is placed between said second polarizer (263, 463) and the photodetector (261, 461).

19. An optical sampler **characterized in that** it comprises an optical switch according to any of the preceding claims, adapted so as to switch a signal to be sampled during a sampling window.

20. The optical sampler according to claim 19, **characterized in that** it comprises replication means (510) receiving at the input the signal to be sampled and providing replicas of this signal, at a replication frequency, to said optical switch.

21. The optical sampler according to claim 20, **characterized in that** the switching signal consists of a sequence of pulses, the frequency of which is close to twice said replication frequency.

22. The optical sampler according to claim 20 or 21, **characterized in that** it comprises an optical isolator (560) between the output of the replication means and the input of the optical switch.

23. The optical sampler according to claim 22, **characterized in that** the replication means comprise a second fibre-optic loop (525) closed on a sixth optical coupler (530), the optical signal to be sampled being injected into the loop via an input port of this coupler, both ends of this fibre being respectively connected to the other input port and to an output port of the sixth coupler, the other output port of the sixth coupler providing said replicas of the signal to be sampled to the optical switch, and amplification means (540) for compensating attenuation of the signal in said second loop.

24. The optical sampler according to claim 23, **characterized in that** the amplification means comprise a parametric amplifier pumped by pump square waves synchronized with the passage of the replicas of the signal to be sampled in the loop, the parametric amplifier being followed by an idler wave filter.

25. A sampler adapted for sampling an electrical signal, **characterized in that** it comprises electro-optical modulation means intended for converting said electric signal in an optical signal and an optical sampler according to any of claims 19 to 24 for sampling the thereby obtained optical signal.

**Patentansprüche**

1. Optischer Schalter, umfassend eine optische Einzelmodenfaserschleife (410), von der wenigstens ein Abschnitt (411, 412) nicht linear ist, wobei die Schleife auf einen ersten optischen Koppler (240, 340) zurückgeführt ist, wobei der Schalter einen zweiten optischen Koppler (230, 430) umfasst, der dazu ausgelegt ist, ein Schaltsignal (P) in die Schleife in einer ersten Ausbreitungsrichtung zu injizieren, wobei der erste optische Koppler dazu ausgelegt ist, ein zu schaltendes Signal (S) zu injizieren und in zwei erste Signale ($S^+$, $S^-$) zu teilen, die sich in der Schleife im Uhrzeigersinn und im Gegenuhrzeigersinn ausbreiten und hieraus ein erstes Signal zu extrahieren, das mittels eines ersten Schaltfensters ($W_1$) geschaltet wird, **dadurch gekennzeichnet, dass** er ferner umfasst:

 - Mittel (272, 262, 282, 472, 462, 482) zum erneuten Injizieren des ersten geschalteten Signals ($S_2$) in die Schleife über den ersten Koppler;
 - Mittel (271, 281, 471, 435) zum erneuten Injizieren des Schaltsignals in die Schleife in einer zweiten Ausbreitungsrichtung, die der ersten Richtung entgegengesetzt ist, wenn das erste geschaltete Signal erneut in die Schleife injiziert wird;
 - wobei der erste Koppler (240, 440) ferner dazu ausgelegt ist, das erste geschaltete Signal in zwei zweite Signale ($S_2^+$, $S_2^-$) zu teilen, die sich in der Schleife im Uhrzeigersinn und im Gegenuhrzeigersinn ausbreiten, und hieraus ein zweites geschaltetes Signal mittels eines zweiten Schaltfensters ($W_2$) zu extrahieren, das mit dem ersten Schaltfenster überlappt.

2. Optischer Schalter nach Anspruch 1, **dadurch gekennzeichnet, dass** er einen ersten Abschnitt (211) und einen zweiten Abschnitt (212) aus nichtlinearer Faser umfasst, wobei der zweite optische Koppler (230) dazu ausgelegt ist, das Schaltsignal in den ersten Abschnitt in der ersten Ausbreitungsrichtung zu injizieren, und wobei die Mittel (271, 281) zum erneuten Injizieren des Schaltsignals dazu ausgelegt sind, über den zweiten Koppler das Schaltsignal in den zweiten Abschnitt in der zweiten Ausbreitungsrichtung erneut zu injizieren.

3. Optischer Schalter nach Anspruch 2, **dadurch gekennzeichnet, dass** die Mittel zum erneuten Injizieren des Schaltsignals ferner einen ersten dichroitischen Spiegel (281) umfassen, der dazu ausgelegt ist, das Schaltsignal zu reflektieren und das zu schaltende Signal nicht zu reflektieren.

4. Optischer Schalter nach Anspruch 3, **dadurch gekennzeichnet, dass** die Mittel zum erneuten Injizieren des Schaltsignals ferner ein erstes Verzögerungselement (271) umfassen, das zwischen dem ersten dichroitischen Spiegel und einem Port (232) des zweiten optischen Kopplers (230) angeordnet ist.

5. Optischer Schalter nach Anspruch 1, **dadurch gekennzeichnet, dass** er einen einzigen Abschnitt aus nichtlinearer Faser (411) umfasst, und dass die Mittel (471, 435) zum erneuten Injizieren des Schaltsignals einen dritten optischen Koppler (435) umfassen, wobei der zweite und der dritte optische Koppler den gleichen Kopplungskoeffizienten haben und jeweils dazu ausgelegt sind, das Schaltsignal in den Abschnitt in der ersten und in der zweiten Ausbreitungsrichtung zu injizieren.

6. Optischer Schalter nach Anspruch 5, **dadurch gekennzeichnet, dass** er einen vierten optischen Koppler (437) umfasst, der an einem Eingangsport das Schaltsignal empfängt, und dessen Ausgangsports mit einem Eingangsport (431) des zweiten optischen Kopplers (430) beziehungsweise mit einem Eingangsport (438) des dritten optischen Kopplers (435) verbunden sind.

7. Optischer Schalter nach Anspruch 6, **dadurch gekennzeichnet, dass** die Mittel zum erneuten Injizieren des Schaltsignals ein erstes Verzögerungselement (471) umfassen, das zwischen einem Ausgangsport des vierten optischen Kopplers und dem Eingangsport (438) des dritten optischen Kopplers (435) angeordnet ist.

8. Optischer Schalter nach einem der vorhergehenden Ansprüche, **dadurch gekennzeichnet, dass** die Mittel zum erneuten Injizieren des ersten geschalteten Signals einen zweiten dichroitischen Spiegel (282, 482) umfassen, der dazu ausgelegt ist, das zu schaltende Signal zu reflektieren und das Schaltsignal nicht zu reflektieren.

9. Optischer Schalter nach Anspruch 8, **dadurch gekennzeichnet, dass** die Mittel zum erneuten Injizieren des ersten geschalteten Signals einen Viertelwellenfaserabschnitt umfassen, der zwischen dem ersten Koppler (240, 440) und dem zweiten dichroitischen Spiegel (282, 482) angeordnet ist, und dass das zu schaltende Signal am Eingang (241, 441) des ersten Kopplers eine lineare Polarisation besitzt.

10. Optischer Schalter nach Anspruch 9, **dadurch gekennzeichnet, dass** der dichroitische Spiegel durch Abscheidung einer reflektierenden Schicht am Ende des Viertelwellenfaserabschnitts realisiert ist.

11. Optischer Schalter nach Anspruch 10, **dadurch gekennzeichnet, dass** die Mittel zum erneuten Injizieren des ersten geschalteten Signals ferner ein zweites Verzögerungselement (272, 472) umfassen, das zwischen dem ersten Koppler und dem Viertelwellenfaserabschnitt angeordnet ist.

12. Optischer Schalter nach Anspruch 4 oder 7, **dadurch gekennzeichnet, dass** der Verzögerungswert ($\tau_1$) des ersten Verzögerungselements (271, 471) die Überlappung des ersten und des zweiten Schaltfensters sicherstellt.

13. Optischer Schalter nach den Ansprüchen 11 und 12, **dadurch gekennzeichnet, dass** die Verzögerungswerte ($\tau_1$, $\tau_2$) des ersten beziehungsweise des zweiten Verzögerungselements die Überlappung des ersten und des zweiten Schaltfensters sicherstellen.

14. Optischer Schalter nach einem der vorhergehenden Ansprüche, **dadurch gekennzeichnet, dass** er in der Schleife eine mechanische Vorrichtung zur Polarisationskorrektur (290, 490) umfasst.

15. Optischer Schalter nach einem der vorhergehenden Ansprüche, **dadurch gekennzeichnet, dass** die optische Faser eine doppelbrechende Faser mit Beibehaltung der Polarisation ist.

16. Optischer Schalter nach einem der vorhergehenden Ansprüche, **dadurch gekennzeichnet, dass** das zu schaltende Signal an einen Eingangsport (241, 441) des ersten Kopplers über einen fünften Koppler (220, 420) übertragen wird, an dessen Eingang sich ein erster Polarisator (225) befindet, wobei der andere Eingangsport (223, 243) mit einem zweiten Polarisator (263) verbunden ist, dessen Polarisationsebene orthogonal zu jener des ersten Polarisators ist.

17. Optischer Schalter nach Anspruch 16, **dadurch gekennzeichnet, dass** ein Photodetektor (261, 461) am Ausgang des zweiten Polarisators (263, 463) montiert ist.

18. Optischer Schalter nach Anspruch 17, **dadurch gekennzeichnet, dass** ein Interferenzfilter (260, 460), welches das geschaltete Signal passieren lässt, jedoch nicht das Schaltsignal, zwischen dem zweiten Polarisator (263, 463) und dem Photodektor (261, 461) angeordnet ist.

19. Optischer Abtaster, **dadurch gekennzeichnet, dass** er einen optischen Schalter nach einem der vorhergehenden Ansprüche umfasst, der dazu ausgelegt ist, ein abzutastendes Signal während eines Abtastfensters zu schalten.

20. Optischer Abtaster nach Anspruch 19, **dadurch gekennzeichnet, dass** er Replikationsmittel (510) umfasst, die am Eingang das abzutastende Signal empfangen und Repliken dieses Signals mit einer Replikationsfrequenz an den optischen Schalter liefern.

21. Optischer Abtaster nach Anspruch 20, **dadurch gekennzeichnet, dass** das Schaltsignal durch eine Sequenz von Pulsen gebildet ist, deren Frequenz nahe dem Doppelten der Replikationsfrequenz liegt.

22. Optischer Abtaster nach Anspruch 20 oder 21, **dadurch gekennzeichnet, dass** er einen optischen Isolator (560) zwischen dem Ausgang der Replikationsmittel und dem Eingang des optischen Schalters umfasst.

23. Optischer Abtaster nach Anspruch 22, **dadurch gekennzeichnet, dass** die Replikationsmittel eine zweite faseroptische Schleife (525) umfassen, die auf einen sechsten optischen Koppler (530) geführt ist, wobei das abzutastende optische Signal in die Schleife über einen Eingangsport dieses Kopplers injiziert wird, wobei die zwei Enden dieser Faser mit dem anderen Eingangsport beziehungsweise mit einem Ausgangsport des sechsten Kopplers verbunden sind, wobei der andere Ausgangsport des sechsten Kopplers die Repliken des abzutastenden Signals an den optischen Schalter liefert, sowie Verstärkungsmittel (540) zum Kompensieren der Dämpfung des Signals in der zweiten Schleife.

24. Optischer Abtaster nach Anspruch 23, **dadurch gekennzeichnet, dass** die Verstärkungsmittel einen parametrischen Verstärker umfassen, der durch Pumpfenster gepumpt wird, die mit dem Durchgang der Repliken des abzutastenden Signals in der Schleife synchronisiert sind, wobei auf den parametrischen Verstärker ein Idler-Wellenfilter folgt.

25. Abtaster, der dazu ausgelegt ist, ein elektrisches Signal abzutasten, **dadurch gekennzeichnet, dass** er elektrooptische Modulationsmittel zum Umwandeln des elektrischen Signals in ein optisches Signal sowie einen optischen Abtaster nach einem der Ansprüche 19 bis 24 umfasst, um das derart erhaltene optische Signal abzutasten.

**Fig. 1A**

**Fig. 1B**

**Fig. 2**

**Fig. 3**

**Fig. 4**

**Fig. 5**

**EP 2 171 535 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0451227

**Littérature non-brevet citée dans la description**

- **G.P. AGRAWAL.** Lightwave technology. Wiley-Interscience, 380-389
- **B.C. WANG et al.** A novel fast optical switch based on two cascaded Terahertz Optical Asymmetric Demultiplexer. *Optics Express,* 14 Janvier 2002, vol. 10 (1), 15-23